# DEMANDE DE BREVET EUROPEEN

(11) **EP 4 664 445 A1**
(43) Date de publication de la demande: **17.12.2025**
(21) Numéro de dépôt: 24203058.3
(22) Date de dépôt: 26.09.2024
(51) Int. Cl.: G10G 1/02, G09B 15/02

(54) **DISPOSITIF DE COMPRESSION PHYSIQUE AVEC ASSISTANCE DE L'INTELLIGENCE ARTIFICIELLE, SUR UN ÉTAGE DE SYMBOLES, ÉQUIVALENT PROJECTION DE PLUSIEURS ÉTAGES D'AGENCEMENT PAR PIANO VIRTUEL**

(30) Priorité: 28.09.2023 FR 2310382
(71) Demandeur: Valéry-Daulon, Marc, 56870 Larmor Baden (FR)
(72) Inventeur: Valéry-Daulon, Marc, 56870 Larmor Baden (FR)

(57) **Abrégé**

Dispositif de compression physique avec assistance de l'Intelligence artificielle sur un étage de symboles, équivalent projection de plusieurs étages d'agencement par piano virtuel..

Le dispositif selon l'invention, assisté méthodiquement de l'IA exploite la synergie de compression d'étages de symboles juchés en prolongement (6b) d'un clavier, des contributions de leurs spécificités, de l'interactivité avec l'opérateur, générant un effet technique supplémentaire par l'agencement physique d'une symbolique améliorée de partition musicale, dont le contenu assimilé par l'utilisateur permet d'accroître ses performances de transcripteur, compositeur, lecteur, interprète et d'anticipation par l'allègement du circuit visuel et de la charge de travail.

Sur une zone étroite de partition, un étage en compression (2) peut équivaloir en projection trente étages de piano virtuel, "Piano roll" (26) pour les mêmes harmoniques (27).

Dans l'interface digitale, la représentation supporte des étages que différencient flux (16) de couleurs, instructions denses, composés d'éléments graphiques, symboles discriminés, attributs, signes, de complexion numérique.

## Description

### Domaine technique

Le dispositif selon l'invention agence, par un traitement numérique et au-delà d'une simple présentation d'informations, en vertu d'un ordre particulier celui des symboles, une représentation nouvelle de partition (2) musicale étagée, sur un écran d'ordinateur, une interface digitale, virtuelle, holographique, dans une symbolique améliorée, compactant des suites imagées de notes de musique, qui facilite à un opérateur le déchiffrement la lecture de la partition, l'anticipation le jeu et la création musicale, sur un mode interactif.

Cette symbolique améliorée, à l'ossature numérique dans un cadre interactif, fruit de l'agencement physique de la partition permet une plus grande efficacité de travail pour l'opérateur que ce soit dans son interprétation ou sa composition sa création, et excipe comment c'est à dire par quel agencement physique de la partition, le contenu cognitif lui est soumis, ce par quoi elle peut être considérée comme contribuant à une solution technique d'un problème technique.

Dans un autre domaine avec le même esprit de valeur ajoutée technique, fonctionnelle autour d'un contenu cognitif et de sa transmission, nous pouvons nous rapporter à l'approche du brevet Walker US5802533A "Text processor" dans lequel le degré d'interactivité concerne des paramètres spécifiques du lecteur ses préférences, réglages sur l'apparence et la vitesse de défilement de la présentation notamment.

En premier lieu le coeur du dispositif peut se schématiser comme la projection, sur chaque étage ligne horizontale parallèle au clavier ou s'en rapprochant dans sa représentation, d'un certain nombre d'étages des éléments parallélépipédiques peu différenciés, de maigre symbolique que présentent les logiciels de piano virtuel d'après la technique des robots défilants "Piano roll". Le lot d'étages conjecturalement projetables d'une part, et l'unique étage où ce lot est potentiellement projeté d'autre part, traitent d'un même motif musical tout en corrélant les positions des symboles de notes dans les étages avec les touches dédiées, de ces notes sur un clavier. Ce nombre d'étages projetables, maximum ou optimum, est limité par l'enveloppe maximale possible de la projection, domaine dépendant de la compatibilité entre l'arrangement des conjonction, succession d'harmoniques, tel que présenté fractionné par le piano virtuel ou le dit robot, et son application dans un "conteneur d'espace temps" dédié compressé dans son étage de la nouvelle représentation. Ce nombre doit pouvoir être nuancé en vue d'un juste équilibre, compromis à l'étage de projection entre l'arrangement le plus court, compact, des paquets conduisant à une partition pour opérateur entraîné, d'encombrement minimum, d'étages denses offrant les meilleures anticipation, vitesse de jeu pour un champ visuel le moins sollicité, et un arrangement moins compressé mais doté d'un meilleur potentiel pour être interprété restitué au clavier par un opérateur moins exercé, selon donc des critères variables, suivant les facultés dons handicaps des opérateurs, utilisateurs et la qualité des techniques de projection, d'appréciation du cadre, qu'elles soient opérées par l'humain, l'Intelligence Artificielle "IA" ou les deux ensemble.

Sur chaque étage sauf exception, cette projection verticale arrange des séquences de symboles évolués de notes depuis une ou plusieurs mesures de solfège que le dispositif transcrit méthodiquement dans sa symbolique améliorée en recourant notamment à l'IA, soit directement depuis la numérisation de partitions imprimées de solfège par les technologies de Reconnaissance Optique de Musique"ROM" sous classe de l'IA, soit en s'établissant sur des fichiers déjà existant, musicaux interactifs ".musicxml", ".mxl" basés sur le langage de structuration de données "XML", ceux de type "MIDI" ".midi", ".mid" entre autres, créés en externe après numérisation de ces partitions par technologie ROM, en tenant compte des droits d'auteur dans ces processus et lors des investigations de l'IA, de son "Deep Learning" depuis les banques de fichiers interactifs et de partitions.

La projection implique un ensemble technique de processus de compression des nouvelles séquences symboliques afin de conserver la fonctionnalité des données regroupées sur un seul étage, axe dans un format permettant une haute densité de stockage bien supérieur au format sans densité à chaque étage présenté par les piano virtuel et "Piano Roll".

En second lieu tout comme la référence à une projection initiale implique cette compression, une compression ab initio lors de la création d'un motif musical dans un étage de la nouvelle représentation implique pour cet étage la référence à une projection de plusieurs étages d'une présentation de piano virtuel ou "Piano Roll" pour ce même motif musical : il y a donc une forme d'équivalence entre projection et compression. Par la compression, plus de données, plus fonctionnelles sont proches des doigts et ainsi mieux regroupées dans le champ visuel.

Il en découle un avantage de la nouvelle représentation technique sur celle des pianos virtuels affiliés aux robots défilants.

En troisième lieu, alors que des technologies d'Intelligence Artificielle "Lumières 2.0" et "GPT-3" et ROM sont maintenant capables d'analyser et de traiter une image une photo dans un contexte de données textuelles, elles peuvent en mode étroit se concentrer sur la représentation purement graphique d'une partition du dispositif, d'un piano virtuel ou "Piano roll", soit un dessin, un imprimé, un fichier d'arrêts sur image ou d'une oeuvre manuelle, en la structurant de données numériques musicales interactives que le dispositif peut convertir aidée de l'IA pour les représenter dans sa symbolique.

Le but du dispositif est de soulager et guider l'opérateur dans ses tâches de lecture écriture formation musicales et dans le jeu, par l'effet technique supplémentaire déterminant d'instructions multiples réglant, sur de nouvelles portées de partitions (2) revêtues de caractères particuliers c'est à dire spécifiques, dans un cadre digital et d'interactivité, toute suite de symboles de notes, compressée rehaussée de flux de couleurs, en liaison intime avec un clavier (5) d'instruments à percussion, à air ou électronique, une ou plusieurs marques, de référence (6a) (6b) de la partition devant coïncider avec une ou plusieurs touches cardinales du clavier notamment au "do central" (5a). Les portées distribuent des colonnes perpendiculaires au grand côté du clavier sans nécessairement le toucher, chaque colonne étant dimensionnée en largeur pour s'aligner pointer vers sa marche dédiée au clavier et la prolonger, visiblement pour l'opérateur, de près ou de loin en toute manière.

La manière principale est digitale : une interface interactive, un écran informatique d'ordinateur, ou l'ordinateur, ses périphériques ou un tableau électronique ou un autre moyen de visualisation technique, média, audio-visuel, virtuel, disposé en regard du clavier assure la représentation des suites de notes, symbolique organisée spatialement temporellement, statique ou mobile, et la présentation d'instructions fonctionnelles statiques ou mobiles, la mobilité étant ajustable l'ensemble capable selon certaines options dans l'interactivité si elles sont disponibles, au choix de l'opérateur, et également de façon autonome, d'émettre, restituer, reconnaître des sons de notes, des frappes au clavier en les corrélant le cas échéant avec des séquences de la symbolique et, dans chaque séquence, avec la progression entre les symboles. Par l'interaction, cette corrélation est une facette dans la pédagogie d'apprentissage du fonctionnement du dispositif, pour la compréhension de la représentation, son appréciation et sa maîtrise appliquée dans le moindre effort.

Des principes de visualisation technique, de mobilité, d'instructions toutefois sans densité, primaires caractérisent dans l'art antérieur les présentations par pianos virtuels, robots musicaux défilants de type "Piano roll" et, complétés de l'interactivité, peuvent être considérés comme des simulateurs techniques de création ou d'interprétation musicale. On peut donc tracer des parallèles techniques entre ces systèmes et celui du présent dispositif et exposer comment sa représentation produit un effet technique supplémentaire déterminant au-delà des effets des plus proches systèmes dans le domaine musical, les dites présentations par piano virtuel et robot défilant "Piano roll".

Le rapport technique matériel spatial direct, de la symbolique nouvelle avec les touches, mettant en conjonction les forces physiques digitales avec l'énergie naturelle des yeux mains doigts oreilles, permet d'optimiser et guider le jeu avec anticipation dans un contexte d'instructions denses, sans le joug du solfège.

Méthodiquement le dispositif a recours principalement à la technologie numérique, l'Intelligence Artificielle "IA", les programmes informatiques, ordinateurs, périphériques, réseaux pour reconnaître les données de portées de solfège et le cas échéant celles de pianos virtuels, robots défilants "Piano roll", données de fréquences sonores, de frappes de touches de clavier identifiées optiquement, électroniquement, mécaniquement ou par le son, et les convertir dans les nouvelles portées spécifiques correspondantes moyennant les processus de compression des sus-dites suites du dispositif. De son côté l'IA, par son moteur d'apprentissage "Machine Learning", dans sa quête d'autonomie "Deep Learning" et à la lumière des règles régulant la dite compression, analysera particulièrement au cas par cas les applications humaines croissantes du dispositif formatant les premières pièces musicales dans la nouvelle représentation, les applications suivantes, et les siennes pour y progresser. Un tel traitement de l'IA sur des symboles, données numériques, éléments concrets est une contribution technique, d'amélioration de performances assurant le dispositif d'une plus grande autonomie, efficience dans ses fonctions. Celui-ci met en oeuvre un écran digital tactile ou un autre moyen de visualisation, virtuel, augmenté, holographique, une interface interactive notamment parce que le dispositif peut tenir compte selon des degrés d'interactivité variables d'un retour d'informations signaux, lié aux sollicitations émanant de l'opérateur qu'il soit pianiste, musicien, chanteur, compositeur, transcripteur avec parmi elles les paramètres spécifiques de l'opérateur ses réglages, préférences, instructions, sur la vitesse de défilement dans la symbolique, l'apparence graphique, la mise en pause, ses instructions complémentaires en mode création dans le choix du nombre d'étages projetables, la compression des séquences aux étages de projection, et les paramètres d'autres sources les écarts, erreurs, fausses notes, ou encore les sollicitations de fréquences sonores d'autres origines, et les intégrer dans la symbolique active, temporairement ou définitivement. Cette prise en compte dans le dispositif, d'interactions physiques à divers degrés qu'il souscrit par son effet technique supplémentaire, conduit à optimiser l'agencement de sa symbolique, et la vitesse de défilement horizontale, verticale notamment, ces fonctions permettant in fine un allègement du travail de l'opérateur. Sous cet angle le dispositif peut secondairement être apparenté aux simulateurs techniques de pilotage si, en utilisant un clavier reflétant un tableau de bord, on assimile toute création du joueur, musicale, improvisation, affichée symboliquement par l'écran, l'interface interactive, à une trajectoire libre selon des paramètres stables variant en harmonie dans une enveloppe de vol donnée, et de la même manière toute transcription, interprétation musicale structurée avec commencement, progression, bouquet final à un itinéraire spécifique comportant procédures, branches, niveaux imposés tels que définis par plan de vol, étagements d'hippodrome ou acronymes "SID /STAR", sigle "FL" par exemple.

Secondairement le moyen de visualisation enrichi de la symbolique du dispositif, statique, le cas échéant par l'arrêt sur image de séquences mobiles et imprimé depuis la nouvelle représentation, peut être un magazine, journal ou une feuille une plaque. Dans les portées (1) spécifiques de nouvelles partitions (2) musicales constituées de colonnes (7) (8) accolées parallèles entre elles, destinées à reposer en plan ou en 3D sur un support digital interactif contre le tableau d'un piano ou sur d'autres instruments à clavier (5) de touches, ces colonnes maintenues perpendiculaires au grand côté du clavier, le dispositif organise et régit un assemblage sous forme condensée dit compactage (20) ou compression (13), de séquences de leurs éléments (3), symboles (4) de notes spécifiques, mono ou polychromes répondant, pour ceux des notes, au pré-requis d'être alignés ajustés impérativement précisément (6a) (6b) en vis à vis (5a) et selon les cotes des touches de notes du clavier (5) de grandeur réelle et d'empan standard ou sur mesure, avec comme référence principale le vis à vis précis du "do central" de la partition avec celui du clavier. Par cette synergie, de la compression (13) de séquences de ses éléments, de la contribution des caractères spécifiques définis par "les spécificités" des partitions, portées symboles et autres éléments, et de son interactivité avec un opérateur le dispositif favorise la justesse du jeu précocement, les réactions automatiques sophistiquées, intuitives, un allègement des ressources mentales au bénéfice de l'anticipation et d'une progression technique rapide dans l'appropriation, la maîtrise d'un morceau choisi même difficile.

En régissant les étages (10) de suites compactes de symboles (4) signes et attributs, en les accentuant par des cycles (17) de couleurs (16), par des témoins de l'action ou réaction de l'opérateur avec entre eux les données furtives d'erreur ou fausse note, ce système d'instructions condensées (13) produit, notamment lors de l'interactivité un effet technique supplémentaire déterminant, en permettant de diminuer voire annuler les ressources et charge mentale allouées à l'identification dans les dites suites pourtant denses, des touches à actionner, au profit d'une meilleure anticipation des séquences suivantes sans se soucier donc, non seulement de devoir connaître sur le champ les notes correspondantes aux symboles (4) pourtant arrangés en synthèse sophistiquée, leurs dièse bémol octave mais encore de chercher, en anticipation, des instructions trop éloignées du clavier (5) ou manquantes car hors image en l'absence du traitement technique radical des dites instructions, ou trop éphémères pour être exécutées comme dans le cas des piano virtuel et robot défilant "Piano roll".

Un set de frontières (9) borde les colonnes (7) (8), chaque frontière aboutissant sur 1 feinte touche noire du clavier et chaque colonne sur 1 ou 2 marches touches blanches, et est disposé différemment de celui d'un piano virtuel ou "Piano roll" dont chaque colonne dessert 3 ou 4 marches et aucune frontière ne continue une feinte, il permet donc en synergie avec des différentiations de symboles de marche à feinte, une identification discrimination optimisées, immédiates des feintes ou marches à presser, notes à jouer, chanter, vocaliser ; le clavier semble à hauteur du regard, il saute au yeux. Comme pour les piano virtuel, "Piano roll" on positionne sur le clavier chaque doigt précisément en dessous de chaque symbole de note pour bien sûr actionner la touche correspondante alors même qu'ici les signaux proviennent de séquences denses de données fonctionnelles dans un champ visuel plus confortable, c'est immédiat nul besoin dans un premier temps de connaître la note ni de l'interpoler depuis le solfège d'une échelle différente.

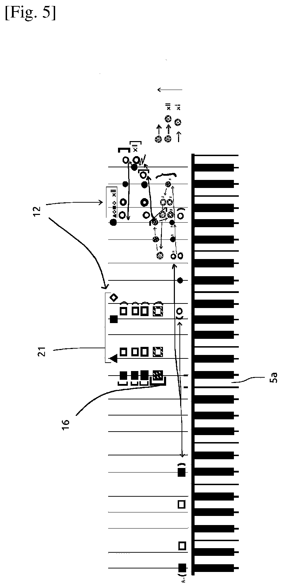

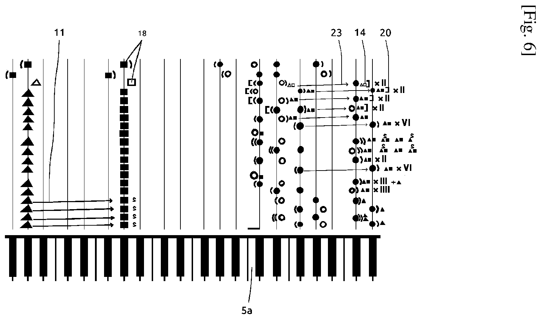

La présente invention concerne, dans la réalisation la transcription assistées de l'IA, le déchiffrement, et le jeu de partitions musicales : un système d'instructions condensées de l'action synthétisée d'une main au regard de l'autre main, comme en (12) [Fig.5] où les symboles concernant une première main sont apposés, contre ceux de la seconde, ou peuvent migrer en interne sans quitter la main concernée, en indices, exposants, attributs, couleurs, et ensuite comme en (20) [Fig.6] pour une compression des données où parenthèses crochets et autres signes distinctifs regroupent des symboles de notes dont les mentions ou variétés des bornes appellent leur éventuelle répétition, symboles en regard direct physique avec leurs touches à actionner, ce en les pointant, surplombant et étant alignés sur elles, désignant immédiatement les notes de musique et, par des effets de formes ou l'aide d'attributs, divers enchaînements, le rythme, l'amplitude, le tempo suscitant chez l'exécutant, joueur, chanteur des réactions automatiques sophistiquées et intuitives. Concernant l'interprétation d'une partition au piano, l'avantage technique déterminant de ce système permet au joueur d'améliorer notamment la coordination, le sens musical, la rapidité d'exécution du morceau, sans recourir au solfège, sans se soucier du nom des notes, de leur situation théorique ou réelle malgré leurs symboles arrangés en synthèse sophistiquée, et d'anticiper, embrasser intuitivement le développement de la partition.

Dans son noyau essentiel, le dispositif compacte certaines répétitions ou séquences de symboles de notes, d'accords, de familles d'accords, sur très peu d'étages (10) voire sur un seul en charge de la succession d'une multitude d'harmoniques sonores, alors que le "Piano roll" ne peut attribuer un seul étage que pour une seule harmonique ou conjonction d'harmoniques, jamais cela pour des successions, répétitions.

Le dispositif selon l'invention favorise un nouveau produit pour la formation musicale, dans un format tout à fait acceptable qu'il soit intégré dans un support digital, aux longueurs des claviers et de hauteur suffisante pour la représentation de plusieurs étages de la symbolique permettant ainsi l'anticipation en lecture, au jeu et des arrêts sur image amples, ou qu'il soit d'édition au format A1 raccourci en hauteur celle du tableau d'un piano droit soit par exemple à 42 cm, et éventuellement amputé en longueur des portées de colonnes vierges, ce format repliable en deux pour former un format A2 raccourci recto-verso de journal, magazine, un peu plus grand que celui d'une partition traditionnelle notamment de solfège, et nécessitant possiblement la réalisation d'un support spécifique disposé de préférence au plus près des touches du clavier sans gêner leur action ni celle des mains.

La présente invention s'inscrit dans le cadre de la réforme de la Formation Musicale de 1977 par le ministère de la Culture qui préconise une nouvelle approche, jugeant l'apprentissage fastidieux du solfège trop éloigné du but à atteindre et en opposition avec toute démarche initiale voulant s'appuyer sur du concret.

### Technique antérieure

Dans cet esprit certains procédés, techniques avaient eu le mérite de voir le jour avant cette réforme ou l'ont vu par la suite, visant à affranchir le lecteur, joueur, chanteur de la maîtrise du solfège ou sinon y joindre une introduction pratique en facilitant l'apprentissage le cas échéant :
en présentant un enchaînement vertical telle la "Klaviar technique" début 20ème siècle, et plus récemment les piano virtuel et "Piano roll" numériques et le "NM Score",
ou en présentant un enchaînement plus horizontal, telles ces techniques de référencements d'octaves et d'accords au moyen de lettres majuscules.
Le piano virtuel, apparenté au "Piano roll" fait descendre verticalement des symboles de notes sommairement discriminés vers leurs touches dédiées au clavier, sans chercher toutefois à en condenser l'expression pour réduire le nombre d'étages et rapprocher les phrases éloignées. Pour favoriser l'actionnement immédiat par les mains, des touches également sélectionnées par cette descente de symboles, il exploite des couleurs différentes et constantes pour chaque main et plus ou moins foncées, sur des formes plus ou moins étroites selon les marches ou feintes, ce qui allège déjà la charge de distinction des dièse, bémol et bécarre. Il présente aussi un ajustement de ses colonnes avec le clavier, mais avec des colonnes foncées, différentes, plus larges, et dont aucune frontière est en continuité d'une feinte contrairement au présent dispositif. Les dites formes subissent un morphisme sans proportionnalité qui les rendent plus étroites sur une feinte que sur une marche, et ce contrairement au présent dispositif, de catégorie comparable, lequel privilégie un autre discriminant plus parlant, et très pratique dans sa mise en oeuvre quand il s'agit du rappel de symboles en indexation à des échelles inférieures.
Toutes ces techniques comme appoint du solfège ou pour s'en affranchir portent du fruit tout en étant sujettes aux limitations suivantes et qu'il convient de dépasser par le présent dispositif selon l'invention avec le nouvel effet technique surclassant qu'il procure dans la catégorie des piano virtuel et robot défilant numériques notamment.

### Problème technique

Dans le premier cas susdit d'enchaînements verticaux, même si leur mise à l'échelle d'un clavier de piano ou autre instrument à touches est possible, particulièrement pour le piano virtuel ou "Piano roll" c'est à dire que les dimensions des partitions ou des animations électroniques, informatiques permettent une continuité physique et matérielle entre leurs compartiments et ceux des touches physiques sur clavier électronique ou numérique virtuel, cette mise à l'échelle est contrariée par le fait du nombre trop important de notes successives représentant chacune un étage dans l'enchaînement vertical, au détriment de la vue d'ensemble des phrases à venir, très limitée. Quant à elle, la technique "Klaviar" ne supporte pas en pratique un enchaînement rapide dans les phrases complexes. Pareillement les piano virtuel et "Piano roll" imposent sur le clavier un rythme difficilement soutenable visuellement, source de confusion. Concernant le second enchaînement plus horizontal il est encore demandé un effort de mémorisation trop important avant d'atteindre la virtuosité.

En l'état actuel sans compression les robots, quand bien même leurs écran et clavier seraient à l'échelle du clavier réel, sont peu performants comme auxiliaire pour jouer, composer sans solfège, même en considérant un arrêt sur image, la symbolique trop succincte, peu discriminante peu pertinente entraînera des confusions de lignes et symboles de notes activant les touches, en lecture jamais rapide de surcroît, ou bien du fait que l'on ait quitté la lecture pour observer le clavier réel.

Enfin ces techniques sont peu adaptées à l'édition de partitions papier dans un format court, pratique, productif offrant de la visibilité dans l'anticipation du jeu ce qui est espéré du dispositif dès le stade de conception d'une composition musicale dans sa symbolique améliorée.

### Solution technique

Afin de surpasser les limitations sus-dites, d'atteindre plus rapidement une plus grande vitesse d'exécution du jeu sans confusion, intuitivement, sans nécessairement connaître le solfège, d'offrir de meilleurs outils de composition, de transcription de partitions traditionnelles dans le nouveau format du dispositif, une meilleure vue d'ensemble, de séquences musicales successives dans une partition et d'en rapprocher d'autres plus lointaines, le dispositif selon l'invention s'applique à synthétiser, densément techniquement via l'IA et le traitement numérique dans l'interactivité avec l'opérateur, une symbolique améliorée de séquences de notes de musique comme un ensemble compacté de paquets de symboles, signes, attributs distribués dans des colonnes pseudo verticales et sur leurs frontières, positionnées précisément en regard des touches d'un clavier.

Communément avec la technique des piano virtuel et "Piano roll", la position horizontale verrouillée des symboles est directement intimement reliée à la présence réelle ou virtuelle du clavier (5), à ses dimensions échelle et à son "do serrure" (5a). En effet un vis à vis des symboles de notes avec les touches d'un clavier ou les cordes d'une guitare est déjà usité par les robots musicaux ou dans les tablatures à symbole unique pour guider la main automatiquement à l'action juste cependant, dans ses nouveaux objectifs sus-mentionnés, l'invention libère un effet technique supplémentaire déterminant par la contribution de l'agencement physique, la compression modelée méthodiquement avec l'aide de l'IA et de l'opérateur, les données fonctionnelles dans un cadre digital et d'interactivité, une figuration nouvelle plus pertinente des portées en vis à vis des touches, une discrimination poussée des symboles, l'ajout d'attributs signes mentions légendes et par un nouvel ordonnancement des couleurs, l'ensemble dans la dite synergie "compression /spécificités / interactivité" définie précédemment en rubrique "Domaine technique", ensemble transmis à l'opérateur avec l'objectif d'accroître ses performances de lecteur, interprète, compositeur ou traducteur assisté de l'IA.

Les positions, formes des symboles et certains de leurs attributs, synthèses de la coordination des mains du pianiste tels que bornes indices exposants signes mentions couleurs, aident à situer et préciser l'action des mains, notamment de part et d'autre du "do central", ou plus généralement à gauche ou à droite sur le clavier.

L'indexation, rappel de symboles vient à une échelle réduite avec proportionnalité pour raisons de synthèse, place, légèreté et pouvoir discriminant : dans ce cas fréquent, c'est la raison principale pour laquelle une discrimination entre symboles de marche ou feinte en leurs positions actives non indexées, ne peut pas avoir lieu selon modification non proportionnelle, morphisme des contours extérieurs de leur forme comme pour le piano virtuel ou "Piano roll" où un parallélépipède large ou carré sur une marche se voit rétréci et moins large ou rectangle sur une feinte car cette technique ne propose pas de rappel de symboles en indexation.

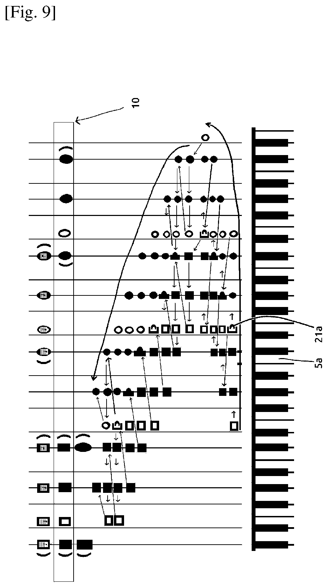

Les parenthèses crochets accolades participent principalement de la compression d'accords comme en (10) [Fig.9] mais éventuellement aussi de phrases musicales possiblement répétitives, ou de suites fléchées de leurs sous ensembles comme en (23) [Fig.6], et ainsi de la synthèse pour une partition plus courte condensée tout en restant légère.

D'autres attributs de couleurs et signaux directionnels, flèches, lignes continues ou discontinues, pointillés notamment permettent de se situer aisément dans la partition, et de s'y resituer pendant la lecture ou après une pause, hésitation ou erreur.

### Avantages apportés

L'effet du dispositif, par la synergie de ses constituants élaborés combinés par l'IA et visant à alléger, pour le supervisant humain le temps de transcription de partitions traditionnelles au nouveau format du dispositif, et pour l'utilisateur final la dépendance au solfège, a des incidences accrues dans la composition, la transcription musicale, la performance de l'interprète dans son jeu, la justesse immédiate avec moins de faux accords notes, sur la rapidité de progression et d'appropriation du morceau, sur la gestion des ressources de l'opérateur au profit d'une meilleure anticipation et de l'intuition, sur le débit de données avec compression (13) adapté à toute représentation digitale interactive contre le tableau d'un piano et autorisant des formats éditables assez compacts proches de ceux de partitions traditionnelles.

Pour le lecteur, joueur interprète l'avantage principal est de pouvoir embrasser plus de signaux hautement caractérisés, interactifs, de symboles mieux discriminés dans un champ visuel plus concentré moins sollicité, donc plus confortable ce qui allège grandement la charge de travail intellectuel, pratique de l'opérateur, au bénéfice des capacités d'anticipation que procurent et cet allègement de la charge et le format ramassé de la symbolique en flux de couleurs, qui augmente la visibilité de signaux plus lointains dans la partition.

Par un balayage réduit du champ visuel, le joueur surmonte la difficulté du cumul de signaux étagés puisque beaucoup arrivent par paquets à un même étage considéré qu'il garde sous les yeux et peut expertiser plus longuement dans une durée variable suivant la taille du paquet, soit parce que le défilement ralentit soit parce qu'il s'arrête un certain temps.

Avec un bon rythme et presque instantanément Il peut entreprendre une phrase musicale et sa mélodie, y mettre de la balance et assez tôt avec les deux mains ensemble, c'est donc un dispositif un produit plus efficient, complet que le piano virtuel ou "Piano roll" qui, en l'absence de la dite synergie sollicite davantage le champ visuel. En effet le piano virtuel est caractérisé par des portées pseudo verticales en vis à vis d'un clavier, mais sans la polyvalence de ce qui démarque radicalement le présent dispositif dans leur catégorie technique, à savoir un agencement de nouvelles colonnes plus pertinent et conforme à l'architecture et fonctionnalité d'un clavier avec des symboles mieux discriminés, en cela c'est un autre avantage, la compression, synthèse en nouveaux flux de couleurs, la progression multidirectionnelle dans la symbolique comme à rebours, rétrograde, oblique.

Concernant une des dimensions capitales du dispositif, on attire maintenant l'attention sur la restriction dans l'annexe due à l'impératif des figures en noir et blanc, ayant pour conséquence de coiffer l'effet d'une des dites spécificités, du nouveau flux des couleurs : de sa dimension, dans le sillage du Tategaki propice au flux poétique. Par les effets des flux colorés, des réactions intuitives presque automatiques, le dispositif peut être proposé en appoint dans le traitement de certains handicaps de la psychomotricité, de l'attention ou liés à l'autisme.

En complément de toute aide en marge de la partition dans les légendes (6), l'apprentissage des débutants pourrait nécessiter l'accompagnement d'un enseignant ou thérapeute le cas échéant, connaissant mieux le dispositif et la partition étudiée comme c'est déjà le cas traditionnellement avec le solfège, d'un autre côté l'apprenti sera naturellement autant incité sinon plus à s'inspirer des tempo et rythme d'enregistrements phares de son morceau, à progresser pro-activement dans sa formation musicale.

### Meilleur mode de réalisation de l'invention

D'autres caractéristiques et avantages de l'invention, particulièrement du noyau avec en moyenne la projection, sur un seul étage du dispositif, de nombreux étages exploités par les piano virtuel et robot défilant de type "Piano Roll", étages endossant ensemble plusieurs notes voire une ou plusieurs mesures de solfège, apparaîtront à la lecture de la description détaillée qui suit pour la compréhension de laquelle on se reportera aux figures annexées exemplifiant non limitativement le mode de réalisation particulier sa structure et la méthode, et extraites d'une maquette d'essai complète des applications selon le dispositif de toutes les mesures du 3ème mouvement de la "Sonate au Clair de Lune" de L. V. Beethoven, maquette créée par le déposant des présentes et destinée ensuite à être générée en mode digital, méthodiquement à l'aide de l'IA sous le contrôle d'un opérateur pour former à la fois un produit industriel et un enrichissement des banques de données de l'IA pour les futures applications, notamment de transcription de partitions ou de création musicales, selon la méthode du dispositif.

Ces figures représentent la visualisation d'arrêts sur image du dispositif telle qu'elle apparaît dans le cadre (2) de l'écran digital ou l'interface interactive numérique notamment. Le schéma d'un clavier (5) musical est présent à titre informatif pour la compréhension du mode d'assujettissement et de calage (6a) (6b) du dispositif avec lui (5a). Le clavier n'est pas systématiquement représenté dans son entière longueur, et son éloignement du cadre de la partition (2) du dispositif est variable, comme par ailleurs dans la réalité, et ici pour des raisons de place, clarté des référencements.

### Brève description des dessins

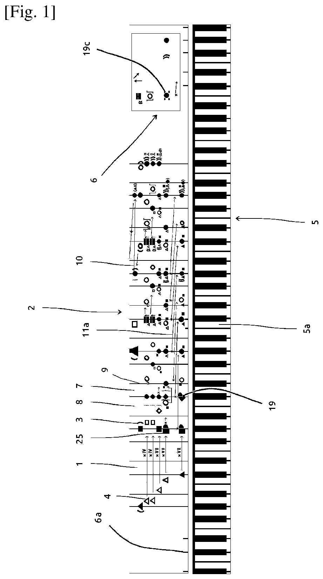

[Fig. 1] est une vue de l'application pour les mesures 1 à 8, et le début de la 9ème mesure jusqu'au 3ème sol dièse joué en clé de sol y compris celui du 1er accord. Au 1er étage de base, dans le cadre digital de la partition (2), le signe étoile (3a) indique le départ puis le décalage de un symbole, par le pouce ou premier actionneur de la main droite, à chaque fois qu'elle progresse de 4 symboles. Ce processus n'est pas ici rappelé exhaustivement aux étages (10) supérieurs concernés, son résumé trouvera place en légende (6) contre ce signe. La main gauche commence la 1ère, elle accompagne la droite par une Basse d'Alberti avec 7 répétitions d'un motif de 2 notes symbolisées par un triangle, et un carré représenté partiellement car accolé à un disque lui aussi partiel dédié à la main droite, l'ensemble formant un hybride (25) sur le sol dièse en raison de la promiscuité des symboles et dans le doigté. Dans ce contexte, le serpentin vertical (21b) délimitant les aires des mains, deux serpentins oeuvrent au 2ème étage indiquant que dans un doigté particulier et à un endroit précis une main empiète sur l'aire de l'autre. Le serpentin (21b) est difficilement exploitable au 1er étage où il est absent. Lors du premier motif de la Basse juste après le do dièse en main gauche, la note de l'hybride est jouée 2 fois en changeant de main alternativement, droite gauche, sans télescopage. La portion de losange dans la main gauche sur le do dièse de l'octave supérieur, n'entre en jeu qu'une fois au premier des deux accords finaux où ce losange est rappelé vers la droite contre leurs parenthèses doublées indiquant répétition, en premier index et entre parenthèses simples déterminant un seul accord par l'association avec le triangle. La dite portion de losange est accolée à une portion de disque de main droite, lequel disque coiffe son accompagnement instantané un petit carré de main gauche, en index inférieur gauche (19). Sur cette figure la majorité des symboles de la main gauche indexés occupe des plages (19) (19c) distribuées dans un sens horaire contre tous disques de la main droite selon une règle de concomitance détaillée plus bas et dont la synthèse est appelée à figurer en légende (6) de la partition (2). Ce processus, similaire aux étages supérieurs concernés, peut présenter aussi une forme d'indexation plus neutre moins réglée spatialement notamment contre les accords ou une note isolée. Aux 4ème et 5ème étages le décalage différent de la main droite la fait rebondir pour jouer 4 notes depuis chaque 4ème frappe des touches : chaque rebond est signifié par les 2 parallélépipèdes superposés, aux do dièses avec le sens du rebond, les durées proportionnelles aux hauteurs des parallélépipèdes, et pour chaque 1er parallélépipède l'accompagnement en index inférieur gauche selon la dite règle, soit un triangle évidé caractérisant ainsi une marche en main gauche, un si. Toujours à ces étages, les notes la et mi extrêmes à droite ont leurs symboles bornés de crochets à pattes non symétriques indiquant que ces notes sont jouées dans le dit décalage, mais sont exclues lors des 2 accords finaux. Toute synthèse utile pour la compréhension des instructions est placée en légende (6) dans la marge et/ ou in situ et pourra être appuyée le cas échéant par un enseignant ou pratiquant du dispositif.

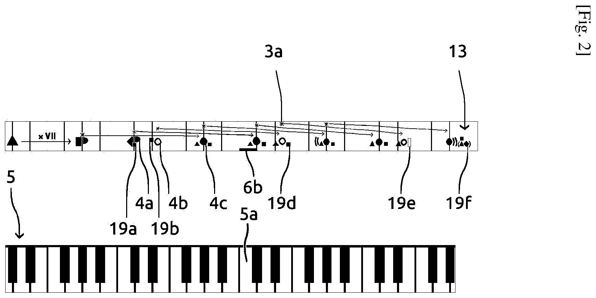

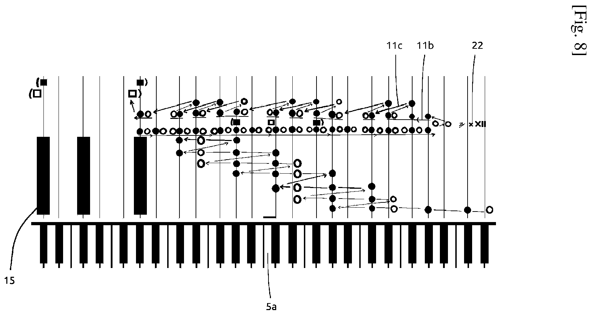

[Fig.2] est une vue de l'application pour les mesures 1 et 2, correspondant exclusivement au premier étage dans [Fig.1], lequel à lui seul restitue 30 étages relativement au "Piano roll" et pour 52 notes du solfège. La forte pondération pour cet étage participe du gain final dans cette contraction relative d'étages, selon le rapport moyen de 1 contre 7 extrapolé d'après les étages du dit prototype tous sujets du dispositif de compression. On y voit une variante horizontale (6b) du repère d'ajustement de la partition au "do central" (5a). Le système de compression ici très poussé, en une ligne de la main droite avec le signe étoile (3a) des décalages et déjà visé plus haut, peut s'appliquer dans [Fig.8] et [Fig.9] pour réduire encore le nombre d'étages déjà compacts.

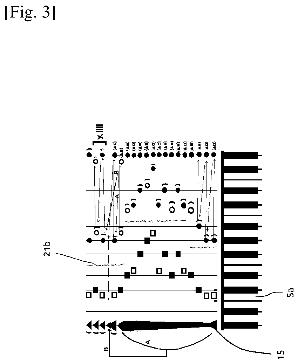

[Fig.3] est une vue de l'application en suite précise de celle dans [Fig.1], soit concernant le début de la 9ème mesure depuis le 4ème sol dièse joué en clé de sol y compris celui du 1er accord, pour aboutir en fin de mesure 14 sur l'avant dernier accord dans les 2 clés. On remarque un symbole de triangle allongé (15) en main gauche pour une note jouée touche tenue enfoncée continûment sur toute la colonne, l'ensemble A répété en B, notation permettant de différencier les enchaînements correspondants fléchés pour la main droite aux termes de la colonne A et de sa répétition B. En haut à droite de la figure et à 2 étages, l'attribut S pour "seule" indique que la note n'a pas d'accompagnement, par ailleurs ces 2 étages crochetés sont gouvernés par un multiplicateur ainsi leur processus est ici répété 4 fois. Le serpentin (21b) aide à placer les mains pour un doigté particulier. On remarque par les parenthèses et l'indexation que 3 notes sont toujours jouées ensemble en accord, en montant dans les étages, depuis l'accord supportant la flèche au 1er étage et ensuite à chaque bout de flèches, d'où le placement des parenthèses particulières, ou globales des colonnes, ces attributs comme les crochets, accolades notamment étant le propre des accords. La main gauche se différencie, en elle-même par des triangles et carrés car ils sont différentiables, rappelés en index contre la main droite, et aussi par rapport à la main droite qui ne comprend que des disques non différenciés car nulle part indexés et parce qu'ils sont fléchés dans un enchaînement clair. Enfin d'après la base, la suite des premières flèches de progression est applicable du 4ème au 14ème étage sans toutefois être matérialisée afin d'alléger la partition.

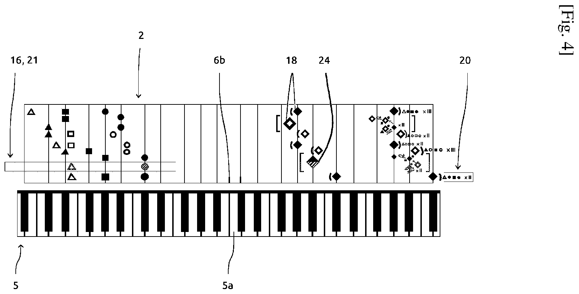

[Fig.4] est une vue de l'application entre le milieu de la mesure 29 depuis l'accord des 2 do dièses en clé de sol, et le terme de la mesure 32. On y voit une autre variante verticale (6b) du repère d'ajustement de la partition dans son cadre digital (2) au "do central" (5a). La main gauche se différencie, en elle-même par des triangles, carrés et disques car ils sont différentiables, rappelés en index contre la main droite, et aussi par rapport à celle-ci qui ne comprend que des losanges non différenciés car nulle part indexés et parce que, pour les losanges fléchés, ils le sont dans un enchaînement clair. Le losange bi teinte (24) et ses crochets bi teintes sont agrandis car il correspondent à deux étages successifs en main gauche. Chaque teinte du losange et des crochets, figurée en noir et blanc, par des hachures ou du plein, est la même que chaque teinte (16) des 2 étages concernés aux 2ème et 3ème étages. Les losanges plus petit à droite ne sont que d'une teinte ou de l'autre entière, en correspondance avec l'un des 2 étages en main gauche, pour une teinte donnée. La hachure peut signifier du vert entier, et le plein signifier du noir entier par exemple. Ce mode d'arrangement couplage et discrimination par les couleurs s'applique plus haut dans les étages notamment aux 7ème et 8ème étages où intervient un autre grand losange sur la note sol dans ses grands crochets, tous bi teintes en réalité, cependant leurs 2 couleurs ne sont pas représentées ici ni même plus à droite sur les petits losanges monochromes fléchés, ni en main gauche. Ces deux teintes peuvent être le noir et le rouge. Pareillement l'alternance de couleurs d'un étage à l'autre, avec ou sans cycle et s'appliquant partout, n'est pas représentée ici pour ne pas surcharger, excepté aux 2ème et 3ème étages comme déjà vu plus haut par le moyen des zones hachurées ou pleines. Un exemple de cycle de couleurs des étages, commun à tout le dispositif et utilisé dans le dit prototype sera ici depuis le 1er étage : bleu vert noir rouge se répétant jusqu'au 9ème et dernier étage de cette figure et au-delà dans sa suite ci-après. Sur une zone étroite de partition, le 1^{er} étage en compression (20) méthodique est équivalent en projection à huit étages de piano virtuel, "Piano roll" pour les mêmes harmoniques. Ce chiffre huit s'obtient par le doublement de la séquence des quatre éléments reportés en accessit (20) à droite de la partition, ces quatre étant une combinaison de trois symboles de notes de la main gauche qui accompagnent ceux de la droite à cet étage.
[Fig.5] est une vue de l'application en suite précise de celle dans [Fig.4], soit depuis la mesure 33 jusqu'au milieu de la mesure 36 à la fin de l'accompagnement du sol dièse en clé de sol. Les symboles du disque sont le domaine de la main droite, les autres symboles sont de la main gauche, le serpentin (21b) n'étant pas rappelé ici. En indiquant en marge les départ, ordre, sens, rebroussement et répétition de divers chemins colorés fléchés annotés des motifs en clé de sol, cette application expose une alternative au confinement (19f) possible en index contre leurs accords en clé de fa, de ces motifs en clé de sol assimilables aux Basses d'Alberti (12). On remarque en légende que la 1ère flèche horizontale est bi teinte car son chemin fait alterner 2 couleurs ici mises en évidence par les aires pleines et hachurées. Ce 1er chemin part de l'accord A et poursuit passant de zone pleine à hachurée jusqu'au début du contenu du crochet, au symbole marqué C lequel enclenche l'accompagnement de l'accord hachuré en main gauche, et il est à remarquer que les 4 symboles précédant C même s'ils sont de la même couleur, hachure n'enclenchent pas l'accord correspondant car ils sont marqués de la lettre S signifiant qu'ils sont joués seuls sans accompagnement. Ces 4 symboles pourraient revêtir une couleur spécifique de leur isolement de l'accord (16), et donc des hachures différentes, toutefois la présente disposition d'affectation de zones hachurées et pleines signifiant les couleurs est la plus simple pour ne pas charger le dessin par d'autres formes de hachures en noir et blanc notamment en légende et pour mieux unifier les 2 rebroussements détaillés en légende de de la marque D à C. Le dernier chemin conduit de D vers l'étage supérieur directement sans rebroussement, il est explicité en légende par une flèche en partie hachurée seulement car elle pénètre un autre étage de couleur représentée par une zone pleine. Le dernier étage, exemple alternatif comme visé plus haut de compression et discrimination (21) est le siège d'une Basse d'Alberti (12) de 3 symboles en synthèse main gauche alors que pour cette main, 4 symboles sont rappelés pour un double enchaînement, en index du sol dièse main droite.
[Fig.6] est une vue de l'application entre le milieu de la mesure 93 depuis le 4ème accord en clé de sol, et le terme de la mesure 101. On remarque ici que le plus petit écart d'altitude en (23), explicité plus bas, est prioritaire sur le symbole le plus proche à l'étage supérieur qui dans ce cas ne représente pas la note à jouer immédiatement. Au 10ème étage un double accord main droite, ré dièse, fa dièse, do, est accompagné en main gauche d'une Basse d'Alberti dont 2 des 4 motifs sont joués seuls isolément entre la répétition de l'accord puis ensuite, ce en alternance avec les 2 autres motifs concomitant de l'accord, et il en est de même à l'étage supérieur. Ce seul étage correspond à 8 étages d'un robot défilant "Piano roll". On observe encore qu'aux 8ème et 13ème étages les parenthèses en main droite recèlent un accord de deux notes jouées sans relâche le temps des 6 motifs de la Basse d'Alberti accompagnatrice et indexée contre lui, accord dont la première note est jouée très peu de temps avant l'autre, par instruction de la flèche. Les serpentins (21b) n'ont pas lieu d'être ici car les aires des mains sont bien séparées naturellement. En main gauche, les flèches se perpétuent virtuellement au dessus de celles visibles tandis que la marque S, pour note isolée seule sans accompagnement, termine au 4ème étage.

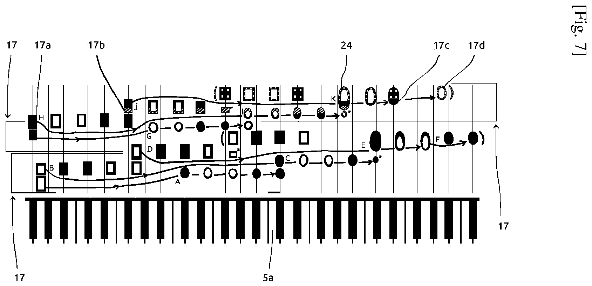

[Fig.7] est une vue de l'application pour les mesures 163 à 166 incluse. Leur phrasé comprend pour chaque main des liaisons de prolongation, alternant avec des liaisons d'expression ou "legato". Le dispositif synthétise le legato par les flèches et la couleur tandis que la prolongation l'est surtout par allongement des symboles, synonyme de durée spéciale du jeu de la note, mais aussi par flèches et couleurs. Les rectangles sont associés à la main gauche, et les ovales à la main droite. Les couleurs aidant chaque main dans le couplage en décalage des étages en quinconce, ne sont figurées ici qu'à partir du 9ème étage soit en (17a) à la marque H, lequel apparaît en couleur pleine noire sans hachure mais sachant que, dans sa version du prototype optimisée en couleur, cet étage est déjà bi teinte, appareillant la couleur de sa moitié inférieure avec celle, identique, de la moitié supérieure de l'étage marqué G également bi teinte, immédiatement en dessous à sa droite. La présente figure étant en noir et blanc, on a remplacé les couleurs par un jeu de 2 hachures différentes, l'une avec rectangles blancs comme en (24) supérieur, et l'autre par bandes obliques blanches comme en (24) inférieur, qui peuvent alterner avec du noir plein comme en (24) milieu, notamment. Globalement et sauf cas ponctuel, chaque étage en quinconce, de symboles de notes, est balayé par sa main dédiée qui le joue en rafale de gauche à droite puis le maintient en tant qu'accord le temps que, dans l'étage le plus près, l'autre main accomplisse sa rafale et commence son accord libérant alors la 1ère main citée qui entame une rafale à l'étage supérieur et ainsi de suite. L'ordre total des rafales devenant accords se chevauchant le long du cheminement est marqué A, B, C, D, E, F, G, H, I, J, K. Les étages A et G sont associés à une liaison de prolongation sur les notes sol et fa dièse respectivement de symboles monochromes, tout à gauche de la partition, au début de chaque flèche. La majorité des symboles sont bi teintes, un seul a 3 teintes (24) et quelques uns sont monochromes dont ceux en F et dans la main gauche de cet accord, ceux de la main gauche entièrement hachurés au dernier étage de la partition, enfin les deux petits rectangles, sol et fa dièse, marqués d'une étoile renvoyant ici exclusivement à un complément d'information appelé à figurer en légende comme introduite en début et fin de la description de [Fig.1]. Chaque cycle (17) peut être de 4 couleurs : noir (17a), rouge (17b), bleu (17c), vert (17d) par exemple, chacune occupant verticalement une demi portion environ dans chaque étage, excepté sur les symboles monochromes ou tri teintes déjà cités.
[Fig.8] est une vue de l'application pour les mesures 183 à 189 incluse. Elle comprend 13 étages. Entre le sommet des rectangles allongés (15) et la base des 2 derniers étages, s'intercalent 4 étages qui témoignent de la force de synthèse du dispositif, résumant à eux seuls 69 étages d'un robot défilant "Piano roll". Concernant les 7 premiers étages de base, il suffit de suivre les flèches en main droite depuis le mi initial jusqu'au do dièse à rebours, alors que l'accompagnement en main gauche est joué continûment sans relâche, d'un seul accord (15) dont on omet les parenthèses car évidentes et pour ne pas charger la partition. Ces 7 étages peuvent encore être compactés en 2 étages à la manière dont sont compressés de façon plus poussée les 10 et 11ème étages, et même en un seul étage comme si au 11ème on remplaçait chaque symbole sur son lieu par une balise telle le signe étoile (3a) comme en [Fig.2]. Les serpentins (21b) de séparation ne sont pas non plus nécessaires tellement la distribution des mains est évidente, avec les disques pour la main droite.
[Fig.9] est une vue de l'application entre un début en mesure 196 au 1er mi de clé de fa, et le terme de la mesure 200 dernière. Les symboles du disque sont pour la main droite et les parallélépipèdes pour la main gauche. Le bouquet final y est synthétisé aux moyens de flèches et notamment du symbole hybride (25), moitié parallélépipède moitié disque, sur marche ou feinte lequel délimite toute borne commune empruntée tour à tour par chaque main ainsi discriminée (21a). Au 1er étage de base, chaque main débute sur chacun des mi autour du "do central" en jouant 4 notes, et dans cette série la main gauche termine sur le mi supérieur, lieu du dit symbole hybride (25) carré/ disque, et borne commune car sous lui fut lancée la main droite. A l'étage supérieur, les mains dans leur nouvelle série de 4 notes entament leur progression en se décalant sur la seconde note dans leur série précédente, et ainsi de suite aux étages suivants avec décalage constant d'une note supplémentaire au regard du départ précédent. Les flèches globales éclairent une progression à droite suivie d'un rebroussement vers le haut des étages, pour une meilleure anticipation, vue d'ensemble. Il est à remarquer que la synthèse employée en [Fig.1] et [Fig.2] pour leur 1er étage notamment, peut s'appliquer ici pour compacter les 12 premiers étages en 2 étages seulement, voire un seul, avec au premier étage une ligne depuis le symbole actuel du mi avant le "do central", jusqu'à celui du mi extrême au 3ème octave en partant du "do central", et avec au second étage une ligne de rebroussement depuis le symbole du do dièse précédent ce mi extrême, jusqu'au symbole du mi dans le 2ème octave sous le "do central". Ces deux lignes seraient parsemées de signes étoile (3a) comme en [Fig.1] et [Fig.2] indiquant le décalage ici des mains simultanément, à chaque progression de 4 symboles. Dans cette synthèse plus poussée, le gain serait une réduction de 10 à 11 étages sur cette figure de l'une des applications du prototype. L'étage final au dessus de (10) arbore en incrustation des notes de solfège correspondant aux symboles et qui pourraient être appliquées ailleurs avec d'autres composantes comme les clés de sol et de fa, ainsi un apprentissage ludique du solfège serait encouragé parallèlement.

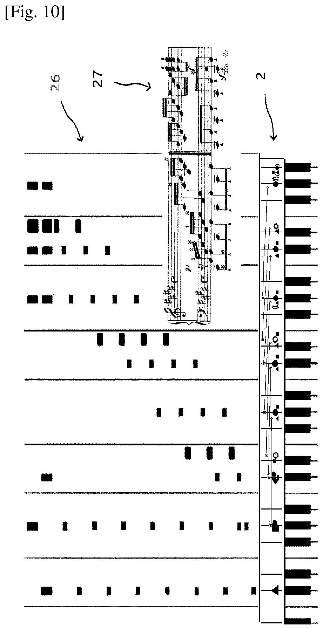

[Fig. 10] reprend la vue de [Fig.2] de l'application pour les mesures mesures 1 et 2, correspondant exclusivement au premier étage dans [Fig.1], vue où se superpose à la représentation (2) du dispositif, la présentation (26) correspondante d'un piano virtuel de type "Piano roll" ce dans l'ajustement adéquat.

La séquence dans ce seul premier étage (2) résulte de la compression selon le présent dispositif d'une suite, insérée dans la vue, de 52 notes du solfège (27) soit de 30 étages successifs de piano virtuel, "Piano roll" (26).

### Exposé de l'invention

L'exposé suivant détaillé, notamment des règles cadres intégrables par l'IA, vient définir plus complètement dans sa structure et sa méthode le dispositif selon l'invention opérant dans son ensemble et dans ses composantes, avec l'aide de l'IA puisant dans ses banques de données et suivant les paramètres d'un supervisant humain interactif dont il accepte au regard d'une variété d'options les instructions, modifications et préférences par toute interface digitale, holographique et par des moyens de reconnaissance optique optronique opto-mécanique vocale audio visuelle.

Ainsi sont définis l'ossature dans un cadre digital des portées, colonnes, frontières, les suites compactes de symboles venant s'y greffer en séquences étagées, leurs caractères particuliers dits "les spécificités", la méthode de l'agencement physique de la symbolique selon ces spécificités et ayant conduit aux maquettes d'application figurées en dessins annexés.

On rappelle à ce stade le coeur du dispositif et le potentiel abordés à la rubrique "Domaine technique" :
« Le lot d'étages conjecturalement projetables d'une part, et l'unique étage où ce lot est potentiellement projeté d'autre part, traitent d'un même motif musical tout en corrélant les positions des symboles de notes dans les étages avec les touches dédiées, de ces notes sur un clavier. Ce nombre d'étages projetables, maximum ou optimum, est limité par l'enveloppe maximale possible de la projection, domaine dépendant de la compatibilité entre l'arrangement des conjonction, succession d'harmoniques, tel que présenté fractionné par le piano virtuel ou le dit robot, et son application dans un "conteneur d'espace temps" dédié compressé dans son étage de la nouvelle représentation. Ce nombre doit pouvoir être nuancé en vue d'un juste équilibre, compromis à l'étage de projection entre l'arrangement le plus court, compact, des paquets conduisant à une partition pour opérateur entraîné, d'encombrement minimum, d'étages denses offrant les meilleures anticipation, vitesse de jeu pour un champ visuel le moins sollicité, et un arrangement moins compressé mais doté d'un meilleur potentiel pour être interprété restitué au clavier par un opérateur moins exercé, selon donc des critères variables, suivant les facultés dons handicaps des opérateurs, utilisateurs et la qualité des techniques de projection, d'appréciation du cadre, qu'elles soient opérées par l'humain, l'Intelligence Artificielle "IA" ou les deux ensemble. » Dans ce dispositif une première composante, des dites spécificités dans la synergie définie précédemment au "Domaine technique", réunit physiquement ou virtuellement dans une représentation digitale, par un écran d'ordinateur ou ses périphériques, par une interface numérique interactive, un ensemble de portées (1) de colonnes simples (7) et doublées (8) pour partition (2) musicale, préférentiellement blanches ou claires mais non exclusivement, en tous cas figurant un fond monochrome ou polychrome qui tranche avec les éléments (3) et symboles (4), perpendiculaires au grand côté d'un clavier (5), ces colonnes (7, 8) possiblement verticales ou faisant un angle de préférence raisonnable avec la verticale, chacune positionnée avec une certaine précision en vis a vis, regard, continuité de la touche lui étant dévolue au clavier (5), certaines colonnes pouvant être discriminées.

Le dispositif avec ses règles, cadres, l'aide de l'IA et selon les paramètres de l'opérateur, transforme pour amélioration l'ossature des portées présentées par le piano virtuel ou autre robot défilant de type "Piano roll" en supprimant leurs colonnes perpendiculaires à la longueur du dit clavier, et en les remplaçant par un jeu de colonnes accolées, de deux largeurs, avec leurs nouvelles frontières (9) visibles dans le prolongement des touches foncées, feintes du clavier, les colonnes les plus larges (8) prolongeant et la paire de touches claires, marches des notes "si"-"do" et l'autre paire des notes "mi"-"fa", tandis que les moins large (7) prolongent les marches des autres notes à chaque octave. Les colonnes sont séparées par des frontières (9) visibles accentuées ou non, frontières tombant ou pointant avec une certaine précision sur les feintes en leur milieu comme en prolongement et sans que la technique de continuité soit limitative. Ces frontières peuvent être chacune une ligne continue ou discontinue, pointillée, ou être éventuellement une ligne épaisse ou colonne discriminée ou non. Les dites frontières tombant, pointant avec précision moyennant des tolérances vers les feintes comme en prolongement, implique qu'entre deux frontières (9) une colonne simple (7) et une double (8) tombent, pointent avec même précision en regard, prolongement, continuité d'une et de deux marches dévolues respectivement. En particulier une apparence possible de cet ensemble dans un support digital serait un plan imagé construit selon la juxtaposition de plusieurs images de claviers (5) parallèles entre eux selon leur longueur, identiques en dimension à celui (5) de l'instrument musical à jouer, avec toutes touches d'une même note de ces claviers, formant colonne et alignées avec précision moyennant des tolérances sur la touche active de cette note au clavier réel, et avec des feintes minces alignées se touchant aux extrémités ou non. Cette ossature améliorée s'interprète comme un allongement de tous les secteurs délimités par les touches du clavier, sur toute la hauteur de la représentation.

Le dit ensemble supporte, des symboles (4) de notes de musique disposés précisément dans les dites colonnes (7, 8) et sur les dites frontières (9), et (3) des attributs des symboles, des signes mentions légendes (6), mono ou polychromes, fixes ou mobiles ou évolutifs, pouvant éventuellement s'accentuer, s'éclairer, se rétro éclairer, s'illuminer, émettre des sons, voix, notes, par toute sorte de moyens digitaux interactifs, d'application, impression, de traitement, accentuation, animation, gravure, braille, électroniques informatiques, physiques, tactiles, audio, visuel, holographiques, mécaniques. Vers les extrémités de cette partition (2) à sa base particulièrement, sont situés (6a) des marques, crans ou lignes figurant les emplacements des première et dernière colonnes (7) (8) et frontières (9) permettant de la positionner contre le clavier ou en regard de celui-ci selon la précision indiquée ci-dessus, et ainsi correctement par rapport à son "do central" (5a). Le support digital et sa partition étant par essence taillés pour que chaque colonne s'ajuste avec sa touche dédiée au clavier, le positionnement peut s'obtenir également en faisant coïncider la colonne dédiée (6b) au "do central" marquée de même en conséquence, avec la touche active du "do central" (5a). Les colonnes doubles (8) des simples (7) n'ont préférentiellement aucune séparation interne, elles représentent au clavier deux marches côte à côte sans feinte entre elles, et les symboles (4) dédiés à ces marches sont disposés dans les parties gauches et droites dans ces colonnes doubles, mais pas au milieu ce qui prêterait à confusion d'autant qu'il n'existe pas de feinte à cet endroit. Le support digital et sa partition (2) sont préférentiellement à la même échelle que le clavier qui leur est associé et qui est en général de dimension et d'empan standards, et sont donc également adaptés aux dimensions du tableau d'un piano ou autre instrument avec clavier. Ils peuvent comprendre éventuellement à leur base un clavier schématisé en entier ou partiellement aux cotes d'un clavier réel préférentiellement. Les dites frontières (9) préférentiellement visibles en permanence, notamment en l'absence locale ou faible densité de symboles (4) de notes, permettent le repérage et la distinction entre feinte et marche voisines contrairement à la technique des robots musicaux défilant tel le piano virtuel ou "Piano roll" où seuls les symboles mobiles de notes ont des formes différentes selon qu'ils relèvent d'une feinte ou d'une marche, sans autre frontière de repérage sous eux vers le clavier.

Ce set de frontières (9) bordant les colonnes (7) (8), chaque frontière aboutissant sur 1 feinte et chaque colonne sur 1 ou 2 marches, est disposé différemment de celui présenté avec un piano virtuel ou "Piano roll" dont chaque colonne dessert 3 ou 4 marches et aucune frontière ne continue une feinte, il permet donc en synergie avec des différentiations de symboles de marche à feinte, une identification et discrimination optimisées, immédiates des feintes ou marches à presser, notes à jouer, chanter, vocaliser.

La partition (2) peut être entièrement tactile et assurer le rôle d'un autre clavier sur toute son étendue, de notes sonores éventuellement lumineuses brillantes si actionnées, la partition pouvant se jouer dessus avec les mains directement, les étages (10) étant fixes ou pouvant défiler ver le bas ou le haut selon que l'on veuille la phrase à jouer toujours au même endroit. Dans le cas où les symboles (4), étages restent fixes, les mains progressent en montant ou descendant pour jouer selon le sens du tableau tactile qui peut s'inverser, mains arrivées à chaque sommet ou base, pour présenter la feuille suivante. Cette représentation tactile, audio-visuelle peut éventuellement se détacher, être éloignée du clavier physique.

Dans ce dispositif la deuxième composante, des spécificités dans la dite synergie, régit dans les dites portées et sur plusieurs étages (10) un enchaînement (11) de pluralité de symboles (4) de toutes formes régulières ou irrégulières ouvertes ou fermées, le cas échéant multiformes, et d'autres éléments (3), attributs et signes, mono ou polychromes, l'ensemble intégré dans une synthèse émaillée d'instructions permettant leur lecture, horizontale, verticale, oblique, omnidirectionnelle, ne suivant pas nécessairement le sens préférentiel de gauche à droite, à rebours ou rétrograde (11b), montante ou descendante (11c), où se dégagent globalement des étages (10) de progression préférentiellement discriminés chacun par une couleur particulière (16) selon un cycle (17) ou non, notamment quand ils concernent une séquence (11) de symboles de notes jouées par les deux mains ensemble ou s'accompagnant, laquelle sera monochrome si les deux mains sont associées à un même étage exclusivement. De tels enchaînements sont les applications créatives du dispositif qui recourt et aux technologies numériques déjà citées dont l'IA et qui tient compte des instructions, préférences de l'opérateur pour transcrire, adapter des partitions de solfège, ou pour directement créer une nouvelle composition en la formalisant sans lui.

Comme règle générale, en puisant dans ses capacités d'apprentissage analyse traitement, ses banques de données graphiques audio visuelles textuelles, et en interaction avec l'opérateur l'IA génère un agencement étagé mobile de symboles dans la nouvelle représentation : globalement les étages défilent verticalement soit régulièrement comme ceux des piano virtuel et "Piano roll" soit d'une nouvelle manière, irrégulièrement par à-coups avec arrêts temporaires permettant l'exploitation des paquets de symboles à un étage particulier considéré par l'opérateur. Le dispositif fait défiler en un mode automatique par défaut, avec la dite aide et selon les paramètres de l'opérateur, les étages de la nouvelle représentation en les rapprochant du dit clavier linéairement suivant un choix de vitesses variables proportionnelles au degré du dit potentiel et linéairement, ou par saccades rythmées en fonction du niveau de densité à l'étage visé par l'opérateur. Le choix de vitesse nulle stoppe le défilement, en arrêt sur image de la représentation, imprimable.

Des symboles (4) de notes sont dédiés pour chaque main à l'échelon d'un étage (10) ou plus, et sont de préférence, dans un même étage, de même couleur (16) mais de formes discriminées (21) différentes d'une main à l'autre, un serpentin (21b) vertical pouvant marquer leur séparation, et même différentes dans une main. Surtout quand ils forment un motif, ou Basse d'Alberti (12) distinguée par des séquences de notes cycliques dans un certain ordre (20) identifiable à l'étage de la représentation par un circuit visuel cyclique des lieux des formes particulières, triangle carré losange disque entre autres, et nécessitent un ordre dans le jeu et donc des discriminations et quand il n'y a pas d'autre auxiliaire indiquant, appuyant cet ordre. Généralement et sauf cas spécifique, les motifs séquences, mélodies, Basses d'Alberti ne sont pas circonscrits au plus près par des bornes, contrairement aux accords dont les symboles de notes sont bornés par des parenthèses crochets accolades notamment. Ensuite au cours de la progression dans les étages (10), toutes ou certaines notes seules ou formant accord motif suite (11), peuvent changer de symboles (4) si l'architecture, et la cohabitation des éléments dans les étages suivants l'exigent, et pour la nécessité d'offrir dans cette configuration les conditions optima aux techniques de compression des suites, à la sûreté de lecture et au jeu. Les symboles (4) les attributs, signes, marqueurs, indexations (3) et leurs suites déterminent des ensembles et sous-ensembles de données que le dispositif contrôlé par l'opérateur condense concentre par des techniques de compression (13) principalement à l'aide de l'Intelligence Artificielle dans un cadre digital et d'interaction avec l'opérateur dans le but de raccourcir la partition (2) en y diminuant le nombre des étages (10).

Définition : la transformation par compactage introduite plus haut au "Domaine technique" est appelée "compression" (13).

Ce dispositif d'amélioration de la présentation par un écran d'ordinateur, une interface digitale interactive avec un opérateur ou virtuelle (2), d'une suite de symboles graphiques de complexion numérique, de notes de musique, associés à un clavier (5) d'instrument musical, de piano, piano virtuel, robot défilant de type "Piano roll" notamment, en une nouvelle représentation (2) mobile étagée de nouveaux symboles (4) décompose conjecturalement à l'aide de règles, de l'Intelligence Artificielle "IA" de ses banques de données et interactivement avec l'opérateur, la dite suite en un nombre minimum de séquences particulières ordonnées constituées de symboles aux caractères spécifiques régulés, séquences ayant chacune un degré de potentiel optimum d'agencement en un format compact sur un étage (10) dédié dans la nouvelle représentation (2), le dit potentiel s'ajustant en interdépendance avec l'architecture, la cohabitation dans les séquences aux étages contigus et le niveau de densification à l'étage dédié.

Ainsi le dispositif transforme la dite présentation en compactant, avec la dite aide et selon les paramètres de l'opérateur, chaque séquence de la dite suite en fonction du dit potentiel, l'ensemble ordonné sur un nombre minimum d'étages (10) chaque étage en charge d'une succession d'harmoniques sonores (11) et représentant chacun par équivalence en projection un nombre supérieur d'étages de la présentation pour cette même succession par un piano virtuel ou "Piano roll".

Le dispositif d'un mode de réalisation préférentiel projette, avec la dite aide et selon les paramètres de l'opérateur, plusieurs étages de la dite présentation par piano virtuel ou autre robot défilant de type "Piano roll", sur un seul étage au minimum dans la représentation du dispositif et dans ce cadre de la dite équivalence laquelle s'étend au couple "projection-compression". Cette projection tasse écrase des éléments étagés vers un seul étage : ces cumul, peuplement empilement d'éléments en un même lieu pour certains, la perte d'une dimension spatiale exigent de singulariser leur nouvel agencement compact (11) par une mémoire de l'enchaînement initial qui les régit, ce que réalise le coeur du dispositif par la dite compression en synergie avec certains caractères spécifiques nouveaux des éléments dans la symbolique améliorée, et la contribution de l'interactivité avec l'opérateur. Ces techniques (13) usent non limitativement de la couleur, de marqueurs de répétition, d'indexation, d'orientation, d'abréviation, et de mentions, signes explicites (3). Elles permettent notamment par le couplage de signes de balise et flèche, de décaler à partir de chaque balise une étoile (3a) par exemple, l'action particulière répétitive d'une main, d'un doigté, le long de tronçons fléchés se chevauchant dans une gamme ou autre progression de notes.

Ainsi les symboles principaux (4) représentant une note de musique à jouer sur une marche ou feinte sont positionnés, sans équivoque dans une colonne (7) (8) mais pouvant la déborder en cas de nécessité de taille imposée, ou le plus symétriquement possible à cheval sur une frontière (9) qu'elle soit sous forme de traits, bande, ligne ou colonne. Ces mêmes symboles (4) de notes peuvent être rappelés en marge d'autres notes ou suites (11) de notes, suites condensées (13) le cas échéant, et en rappel par des techniques d'indexation, en indices exposants, non limitativement, ainsi pour des raisons de place ou de densité, légèreté ils sont souvent réduits à une échelle inférieure (14) et donc, pour empêcher toute confusion, en tâchant de limiter ou d'éviter une modification des proportions. Toutefois une modification des proportions sera recherchée dans le cas de notes à tenir (15) jouées sans relâche sur plusieurs étages, on pourra ainsi étirer un carré en rectangle, un cercle en ovale par exemple, mais sans que cette modification soit nécessairement appliquée quand ces symboles (4) deviennent en rappel, indexés auprès d'autres. Considérons l'option d'interactivité de l'arrêt sur image du dispositif afin de mieux cerner le schéma directeur global, dans l'enchaînement d'étages (10) plus ou moins horizontaux : celui-ci est préférentiellement ascendant depuis la base ou une latitude particulière de la partition (2), le cas échéant au plus près du clavier (5) et des mains, mais la variante descendante est aussi possible dans ce cadre en partant du sommet des portées (1) ou d'une autre latitude et en se rapprochant du clavier. Dans le cas général simple, et sauf indication spéciale chaque main progresse globalement de gauche à droite (11a) dans son étage avec le cas échéant répétition ou reprise avec décalage (11) de cette progression incluant possiblement des variations, et le symbole (4) ou son ensemble (11), de la prochaine note, accord ou motif à jouer pour une main donnée est le plus proche ou est désigné prioritairement dans le sens ascendant par le plus petit écart d'altitude (23) supérieure au regard de l'étage du symbole ou son ensemble, de la note, accord ou motif déjà joué ; et inversement dans le sens descendant on considérera le différentiel d'altitude inférieure, sauf mention spéciale. Ce plus petit écart (23) peut être tel que le symbole de la note à jouer est celui de celle déjà jouée et à tenir sans relâche un certain temps, ainsi les symboles identiques se touchent s'empilent (15) sur plusieurs étages le cas échéant, et il en va de même pour des ensembles de notes, des accords notamment. Ce dispositif dans la dite synergie associe, les symboles principaux (4) de notes à un agencement secondaire d'éléments (3) graphiques picturaux, figures, schémas, tableaux, formes, marques, signes symboliques ou non, textuels ou non, ces éléments, bien distincts des dites frontières (9), pouvant être également des portions de lignes, courbes, des parenthèses crochets accolades, serpentins (21b), soulignement, accentuation, attributs, incrustations, accessits, bandes, pointillés, traits fléchés ou non notamment, mais sans la contrainte de périodicité permanente des frontières, et dans ce cas particulier ils sont donc secondaires. Certains de ces secondaires participent de la ponctuation, tempo, vitesse, doigté, répétitions, caractéristiques de l'enchaînement (11) des notes, l'orientation du jeu, le phrasé, la discrimination des mains et d'autres concernent les mentions légendes (6), et possiblement des portées, symboles, codes, équivalences, correspondances ponctuels communs avec le solfège, ils sont des outils du dispositif de compression (13) des données (3) (4) introduit plus haut.

Dans ce dispositif, la troisième composante des spécificités dans la dite synergie comprend, dans l'enchaînement des étages (10) successifs et pour mieux les distinguer, un ordonnancement nouveau de couleurs, une alternance ou succession de couleurs (16) généralement et préférentiellement uniformes pour chacun (10), et cyclique (17) ou non, sans exclure d'autres discriminations par la couleur que ce soit pour les étages ou seulement les symboles (4), ou entre étages, et pour mieux et vite se repérer en jouant ou se resituer après une pause, dans les étages de la progression, entre eux ou au sein d'un motif (11), accord voire d'une note. Un exemple de cycle (17) périodique peut concerner celui de quatre couleurs uniformes changeantes d'un étage à l'autre, noir (17a) rouge (17b) bleu (17c) vert (17d) et se répétant ainsi tous les quatre étages, ou dans un autre ordre, cette période "quatre" observée spatialement n'étant pas nécessairement dans un volume constant. Il peut exister aussi une imperfection dans le cycle des couleurs qui reprend soit dans l'ordre originel soit dans un autre. En règle générale, un étage (10) associe les deux mains qui s'accompagnent dans une séquence (11) particulière condensée (13) ou non, et les symboles (4) de cette séquence sont de la même couleur pour les deux mains (16) sauf si une première main est associée à un étage ou plus, supplémentaire de la seconde main, et dans ce cas cette première main aura des symboles à plusieurs teintes (24) rappelant chacune l'un des étages associé, dans la seconde main. Cette technique de discrimination non limitative peut aussi s'effectuer au moyen de signes ou mentions ou autres artifices, distinctions, accentuations (3) dédiés, en remplacement ou complément des couleurs.

Dans ce dispositif la quatrième composante, des spécificités dans la synergie, comprend un attribut dont le rôle est discriminant, permettant aux symboles (4) mono ou polychromes et particulièrement ceux des notes d'être immédiatement distingués, reconnus selon leur lieu sur une feinte ou une marche, par la présence (18) ou l'absence d'un évidement ou marque intérieure (18), présence désignant l'état sur une marche par sa teinte blanche ou plus claire que celle de son symbole ou bien différente, ou absence sur une feinte c'est à dire pour un symbole plein ou uni ou sinon se différenciant autrement du symbole d'une marche, ou inversement, sans que cette technique préférentielle de discrimination soit limitative : une discrimination par signes ou mentions ou autres artifices, distinctions, déformations, encoche, appendices dédiés peut venir en complément ou alternative. Le but étant de discriminer au premier regard une marche d'une feinte que l'on pressent déjà sous la main et particulièrement dans la lecture l'appréciation à l'échelle réduite des symboles de notes qui seraient indexés auprès d'autres notes accords ou motifs. Ainsi parmi d'autres techniques, ce cas fréquent d'indexation, rappel de symboles de notes à une échelle réduite (14), donne la raison principale pour laquelle une discrimination des symboles (4) de marche ou de feinte selon leurs positions actives non indexées, ne serait pas pratique en usant de modifications de proportions, morphisme des contours extérieurs de leur forme, et pourrait induire des erreurs d'appréciation du symbole ou une confusion avec un autre, comme dans l'exemple d'un parallélépipède large ou carré sur une marche qui se verrait rétréci et moins large ou rectangle sur une feinte, une telle configuration se prêterait difficilement au rappel à l'échelle réduite (14) de symboles de notes en indexation car un petit carré peut s'y confondre avec un petit rectangle, et particulièrement si des petits symboles sont tracés avec plus ou moins de précisions notamment à main levée, et encore moins si l'on devait rétrécir amincir d'autres symboles, cercle, triangle, losange, étoile (3a) entre autres, ce pour les distinguer sur des feintes.

Dans ce dispositif une première composante, de la compression (13) déjà abordée aux rubriques "Domaine technique" et "Solution technique", dans la synergie avec les spécificités, comprend premièrement le placement, confinement (19) de tout ou partie d'un enchaînement (11) mono ou polychrome du ou des symboles (4) de la note, de l'accord ou du motif joué par une première main, dans l'un des lieux réservés spatialement et temporellement (19) situé selon une règle, en indice en exposant ou avec d'autres signes distinctifs, contre le ou les symboles plus grands, de la note, de l'accord ou du motif joué de la seconde main lors de cet enchaînement, rappelant les ordre et séquence dans la première main, les répétitions, directions, doigté, rythme, tempo et toute instruction générale ou particulière, avec comme exemple simple une Basse d'Alberti (12) ou un accord à répéter le cas échéant. Ces indices ou exposants (19) ou autres attributs peuvent occuper une ou des places, plages particulières contre ou entourant le symbole (4) ou le groupe de ceux de l'accord ou du motif supportant ces attributs : inférieure gauche et droite, supérieure gauche et droite, plages fonctions de l'occurrence de la simultanéité de l'accompagnement pour le dit symbole ou groupe quand il est frappé au clavier une ou plusieurs fois, ou répété. En effet lors de séquences particulières, une même note, ou accord ou motif d'une première main, peut être jouée une ou plusieurs fois, tout en pouvant être accompagnée de la seconde main à chaque ou quelque fois par une note, ou un accord ou motif. Cet accompagnement de la seconde main est précisé en prenant place en exposant indice ou attribut autour du ou des symboles de taille nominale (4) de l'autre main, ce en place inférieure gauche (19a) si l'accompagnement est joué à la 1ère frappe de cette autre main, en place supérieure gauche (19b) si à la seconde frappe de la même, en place supérieure droite comme en (19c) [Fig.4] si à la 3ème frappe de la même, en place inférieure droite (19d) si à la 4ème frappe de la même. Toute place vide (19e) indique que cette autre main est frappée seule sans accompagnement simultané à ce temps. Il advient en [Fig.1] et [Fig.2] par exemple qu'une note d'une première main déjà jouée une 1ère fois au temps t notamment le do dièse main droite 1er étage octave précédent le "do central", soit rejouée à nouveau une fois (4a) au 3ème temps à t+3, et que la note mi suivante jouée à t+1 soit rejouée à nouveau deux fois (4b) suivant la même période du 3ème temps soit à t+4 puis t+7, et que les autres notes jouées initialement à t+2 le sol dièse, t+6 le "do central" dièse, t+10 le 2ème mi, t+14 le 2ème sol dièse soient rejouées à nouveau trois fois (4c) selon cette période, à t+5, t+8, t+11 pour le sol dièse t+2, puis à t+9, t+12, t+15 pour le "do central" dièse t+6, ensuite à t+13, t+16, t+19 pour le 2ème mi t+10, enfin à t+17, t+20, t+23 pour le 2ème sol dièse t+14, tout en étant accompagnée de la seconde main. Cet accompagnement est ici une Basse simple d'Alberti de deux notes main gauche s'alternant tous les deux temps, chaque note se répétant tout les quatre temps, impliquant que l'accompagné main droite soit frappé seul une fois sur deux, sans accompagnement de la Basse. Ces deux notes ne sont jamais frappées seules, sauf la première initialement, et hormis ce cas elles accompagnent toujours chacune une note de main droite simultanément. Cet accompagnement précisé en exposant indice ou attribut (19) autour d'un symbole (4) de la main droite y occuperait la plage inférieure gauche si l'accompagnement est joué à la première frappe de ce symbole, donc dans cet exemple aux temps t pour le do dièse, t+1 pour le mi, t+2 pour le sol dièse, t+6 pour le "do central" dièse, t+10 pour le 2ème mi, t+14 pour le 2ème sol dièse, ou la plage supérieure gauche si c'est à la seconde frappe donc aux temps t+3, t+4, t+5, t+9, t+13, t+17 pour les mêmes notes respectivement, ou la plage supérieure droite si à la troisième frappe soit aux temps t+7 pour le mi, t+8 pour sol dièse, t+12 pour "do central" dièse, t+16 pour le 2ème mi, t+20 pour le 2ème sol dièse, ou la plage inférieure droite si à la quatrième frappe soit aux temps t+11 pour sol dièse, t+ 15 pour "do central" dièse, t+19 pour le 2ème mi, t+23 pour le 2ème sol dièse. Le sens horaire des plages et cette technique d'indexation réglée (19), rappel et compression (13) de données ne sont pas limitatifs, exclusifs. Deuxièmement les plages spécifiques soumises à contraintes décrites plus haut (19) ne sont pas exclusives de plages à caractères plus neutres (19f) dont le positionnement sera stable en index contre un symbole toujours à droite ou à gauche ou dessus ou dessous car lié d'une autre manière à la frappe ou répétition de ce symbole, et des enchaînements avec ou sans répétition, d'accord, motif, séquence peuvent recevoir ce même type d'indexation tout comme les notes sus-dites. Chaque plage d'index peut comprendre aussi plusieurs symboles d'accord ou motif de notes. De l'information concise sur ces modalités de la progression dans les séquences, et de la coordination entre les mains est naturellement située dans la légende (6) où elle trouve place pour une meilleure compréhension et pourra éventuellement être développée par tout professeur connaissant le morceau, le dispositif, et enfin selon une comparaison ciblée occasionnelle avec la version solfège ou d'autres outils, robots. Elle ne figure pas in extenso dans les présentes figures.

Dans ce dispositif la deuxième composante, de la compression (13) dans la synergie avec les spécificités, comprend le compactage (20) basique général ou adapté particulier, créé par synthèse, discrimination (21) et non seulement par confinement neutre (19f) ou réglé (19) mais aussi par d'autres instructions de synthèse, grâce à une pluralité de symboles (4) de notes dont triangle carré disque losange, par exemple pour des Basses d'Alberti (12), et marqueurs (3) secondaires de répétitions (22) tels que parenthèses, crochets, accolades, doubles, triples ou quadruples et ainsi de suite indiquant autant de répétitions dans le jeu des notes, accords, motifs, séquences ou suites ainsi encadrés, ou tels que explicitement indiqués avec opérateurs de multiplication addition, chiffres et textes ou par tout autre attribut, signe, moyen indiquant des répétitions in situ, ou en marge ou indiqué ailleurs dans une légende (6) ou notification, ou indiquant des renvois à d'autres segments à jouer, rejouer comme en [Fig.3] et [Fig.5]. En jeu avec accompagnement, les symboles (4) de notes dédiés à une main sont de préférence discriminés (21) en elle et différents de ceux de l'autre main (21a) et selon deux zones, chacune dédiée à une main et séparées par un serpentin (21b) par exemple, l'ensemble constituant globalement un étage (10) de la même couleur (16) ou paré d'un autre discriminant spécifique. En mode de base général la compression s'applique aux Basses d'Alberti (12) dont, pour la main concernée le motif s'écrit sur une seule ligne avec comme simplification le cas échéant la seule mention de chaque symbole différent uniquement, sans aucune répétition, le plus généralement mais non exclusivement sans encadrement parenthèse ou autre signe similaire de fermeture, tandis que de l'autre main ce motif de l'accompagnement est signifié contre ses symboles en attribut, exposant ou indice sur des plages neutres (19f) ou réglées (19), avec le cas échéant ordre complet du motif pouvant comprendre un nombre plus grand de symboles restant identiques, s'il y a des répétitions (22) dans le dit motif, ordre des touches à jouer. Aussi bien autour des dites Basses (12) que de leur rappel à l'accompagnement en attribut (19), (19f) contre l'accompagné, il peut y avoir mention de répétitions (22) du ou des motifs eux-mêmes ce par toute sorte (3) d'attributs, signes ou instructions explicites. Globalement dans l'enchaînement (11) les symboles de notes se succèdent dans des suites, phrases circonscrites sur un étage (10), alignement pour lequel une variation minimum d'altitude (23) depuis une référence horizontale est recherchée comme en [Fig.1], [Fig.7] et [Fig.8].

Dans ce dispositif la troisième composante, de la compression (13) dans la synergie avec les spécificités, crée un effet déterminant en distribuant un ordonnancement nouveau de couleurs (16) associées (24) sur un même symbole (4) ou suite de symboles, pareillement sur (3) attributs, signes : par exemple et non exhaustivement un symbole de note peut être bi teinte ou multi-teinte (24) indiquant que la touche de cette note doit être tenue jouée sans relâche d'une main pendant que deux ou plus Basses d'Alberti (12) ou phrases des étages des couleurs correspondantes (16), sont jouées de l'autre main comme en [Fig.4], [Fig.5] et [Fig.7]. Ceci permet d'associer des étages (10) (16) d'une main à celui (10) (24) ou ceux de l'autre main comme en [Fig.5]. Il peut y avoir une association (24) de plus de 2 couleurs caractérisant un ou des symboles (4) d'une note, phrase musicale ou tout attribut, signe (3) d'une main, renvoyant à autant d'étages (10) de l'autre main comme en [Fig.7] où des symboles de notes sont polychromes (24) s'ils ont une fonction sur deux ou plus d'étages : ceci permet d'associer des étages (10) (16) d'une main à celui (10) (24) ou ceux de l'autre main, notamment lors des liaisons de prolongation, alternant avec des liaisons d'expression. Les symboles de notes émises par les marches, touches claires du clavier, revêtent une marque (18), de couleur claire ou blanche, de même contour de préférence que celui des symboles. Cette technique de discrimination (24) n'est pas limitative et peut s'effectuer au moyen de signes, mentions, hachures ou autres artifices dédiés en remplacement ou complément des couleurs. Ainsi le dispositif remplace, avec la dite aide et selon les paramètres de l'opérateur, la simple symbolique étagée peu discriminante représentée par le piano virtuel ou autre robot défilant de type "Piano roll" par des étages de symboles préférentiellement colorés parfois hybrides (25) de notes de musique.

Dans ce dispositif la quatrième composante de la compression (13) dans la synergie avec les spécificités établit un agrégat (25) de plusieurs parties de symboles (4) différents constituant un seul symbole hybride sur le même lieu dédié à une note, hybride pouvant éventuellement contenir des marques de séparations démarquant ses composés partiels, indiquant que cette note est jouée par chaque main séparément, les symboles dédiés à une main étant de préférence discriminés différents (21) de ceux de l'autre main comme en [Fig.1] au premier étage avec sol dièse puis do dièse, et au second étage avec sol dièse, et autrement comme en [Fig.9] aux étages 1 (21a) à 4, et étages 6 à 11. Un autre symbole (4) de note, en indice ou exposant (19), peut aussi figurer entier contre cet hybride (25), indiquant l'accompagnement de la main concernée par la forme de cet accessit, et éventuellement selon la règle des plages de placement visée plus haut, non limitative : en [Fig.1] premier étage, le sol dièse (19) en plage inférieure gauche contre le do dièse.

Dans ce dispositif de synergie des dites compression, spécificités et interactivité, des composantes possèdent à divers degrés des potentiels d'action et d'interaction que ce soit physiquement matériellement mécaniquement optiquement électroniquement informatiquement virtuellement en 2D ou 3D, par hologramme, à toute échelle pour le chant par exemple ou la démonstration, par le biais donc de toute servitude technique technologique permettant la mise en oeuvre automatique ou semi automatique de spécificités des dits symboles, attributs signes mentions, portées, par des sons de notes, tonalités, ondes lumières éclairages, et configurés pour réagir à certaines commandes par les doigts, mains, yeux, la voix et les ondes cérébrales.

### Méthode

Dans un mode digital et d'interactivité avec un supervisant humain et pour fructifier ses composantes optimisées par l'IA, le dispositif opère une méthode de conversion des fichiers musicaux interactifs construits sur les fichiers de numérisation, par les technologies de Reconnaissance Optique de Musique "ROM" ou par les techniques de reconnaissance de frappes de touches d'un clavier, de suites de notes de musique et ce vers un nouveau format de fichier musical interactif propre à la représentation du dispositif, avec les étapes suivantes :
a. étape 1 : numérisation de ces suites par les dites ROM depuis une partition imprimée de solfège, ou par les techniques de reconnaissance de frappes de touches d'un clavier.
b. étape 2 : conversion du fichier de la dite numérisation en un fichier musical interactif d'extension ".musicxml", ".mxl", ".midi" ou ".mid" entre autres.
c. étape 3 : L'Intelligence Artificielle "IA" analyse dans le dit fichier musical interactif l'architecture des étages simples présentée par piano virtuel ou "Piano roll", par sa capacité de traiter des images, photos dans un contexte de données textuelles.
d. étape 4 : l'IA, informée de cette architecture et intégrant les règles cadres du dispositif, engage ses moteurs d'apprentissage "Machine Learning" ML et de progression en autonomie "Deep Learning" DL, pour s'enquérir au cas par cas dans ses banques de données, des nombreuses présentations par les dits pianos, des premières maquettes de réalisation humaine et applications physiques selon le dispositif en identifiant les architectures comparables les similitudes initiales ayant reçu ou pouvant recevoir un traitement d'extraction de séquences depuis les dites suites.
e. étape 5 : sur ces bases et celles des processus d'extraction des séquences identifiés, l'IA propose une solution d'extraction des séquences, dans le dit fichier musical interactif, et en demande confirmation de l'opérateur.
f. étape 6 : l'opérateur optimise les paramètres de la dite proposition d'extraction ou bien les remanie en profondeur, et les confirme au dispositif.
g. étape 7 : Le dispositif génère définitivement les dites séquences extraites.
h. étape 8 : toujours sur les bases acquises grâce aux dits moteurs "ML" "DL" avec l'identification, dans ses banques d'échantillons, du couple dans la dite équivalence compression-projection agençant des séquences similaires, l'IA en interpolant leur mode d'application propose, dans un nombre minimum et optimum d'étages, une solution de compression-projection des dites séquences extraites, ce dans un nouveau fichier musical interactif propre à la représentation du dispositif, et en demande confirmation de l'opérateur.
i. étape 9 : l'opérateur optimise les paramètres de la dite proposition de compression-projection des séquences ou bien les remanie en profondeur, et les confirme au dispositif.
j. étape 10 : Le dispositif génère définitivement la compression-projection des dites séquences, dans sa représentation étagée.

### Cadre d'une application industrielle de l'invention

Le dispositif dans son caractère digital, l'écran, l'interface, les moyens informatiques ordinateur périphériques, les présentation et représentation, intégré dans le cadre du moyen de visualisation s'ajustant avec le clavier pré-cité supporte les conditions requises pour une production industrielle.

Il autorise aussi la construction de partitions (2) matérielles éditables industriellement et considérablement plus courtes que celles qui seraient issues de compilation d'arrêts sur image d'une présentation par piano virtuel, "Piano roll" ce dans un rapport pouvant atteindre topiquement 1 contre 30. Ce format moins haut de 20 cm environ que le A1 est repliable en un format raccourci A2 d'impression journal, magazine et applicable dans cette famille, aux mesures du 3ème mouvement de la sonate "Au Clair de Lune" de L. V. Beethoven, dont la maquette d'essai des applications selon le dispositif forme un prototype existant de 19 feuilles recto en A1 court aménageable en un format de 20 feuilles recto verso en A2 court, un peu plus grand que celui d'une partition traditionnelle, adaptable au tableau d'un piano notamment et sur un support spécifique le cas échéant. L'optimisation du format peut être conduite en éludant les colonnes extrêmes communes à la partition et dépourvues de symboles de notes et aussi en renvoyant la légende (6) des marges vers l'annexe.

Ce prototype dégage une synthèse sur environ 536 étages de couleurs cycliques, ou bien 520 étages après synthèse plus poussée abordée en brève description de [Fig.8] et [Fig.9] et appliquée dans [Fig.1] et [Fig.2], à mettre en perspective des 3688 étages environ, bruts sans synthèse correspondants d'une visualisation de piano virtuel de type robot "Piano roll" pour ce mouvement, ici dans un rapport moyen de 1 contre 7. Une autre maquette complète des applications du 1^{er} mouvement de cette sonate selon le dispositif est prête aussi, en 9 feuilles recto en A1 court, toujours dans un très bon rapport de compression.

## Revendications

1. Dispositif d'amélioration de la présentation par un écran d'ordinateur, une interface digitale interactive avec un opérateur ou virtuelle (2), d'une suite de symboles graphiques de complexion numérique, de notes de musique, associés à un clavier (5) d'instrument musical, de piano, piano virtuel, robot défilant de type "Piano roll" notamment, en une nouvelle représentation (2) mobile étagée de nouveaux symboles (4) et **caractérisé en ce qu'**il décompose conjecturalement à l'aide de règles, de l'Intelligence Artificielle "IA" de ses banques de données et interactivement avec un opérateur, la dite suite en un nombre minimum de séquences particulières ordonnées constituées de symboles aux caractères spécifiques régulés, séquences ayant chacune un degré de potentiel optimum d'agencement en un format compact sur un étage (10) dédié dans la nouvelle représentation (2), le dit potentiel s'ajustant en interdépendance avec l'architecture, la cohabitation dans les séquences aux étages contigus et le niveau de densification à l'étage dédié.

2. Dispositif selon la revendication 1 et **caractérisé en ce qu'**il transforme la dite présentation en compactant, avec la dite aide et selon les paramètres de l'opérateur, chaque séquence de la dite suite en fonction du dit potentiel, l'ensemble ordonné sur un nombre minimum d'étages (10) chaque étage en charge d'une succession d'harmoniques sonores (11) et représentant chacun par équivalence en projection un nombre supérieur d'étages de la présentation pour cette même succession par un piano virtuel ou "Piano roll".
Définition : la dite transformation par compactage est appelée "compression" (13).

3. Dispositif d'un mode de réalisation préférentiel selon les revendications 1, 2 et **caractérisé en ce qu'**il projette, avec la dite aide et selon les paramètres de l'opérateur, plusieurs étages de la dite présentation par piano virtuel ou autre robot défilant de type "Piano roll", sur un seul étage au minimum dans la représentation du dispositif et dans ce cadre de la dite équivalence laquelle s'étend au couple "projection-compression". Cette projection tasse écrase des éléments étagés vers un seul étage : ces cumul, peuplement empilement d'éléments en un même lieu pour certains, la perte d'une dimension spatiale exigent de singulariser leur nouvel agencement compact (11) par une mémoire de l'enchaînement initial qui les régit, ce que réalise le coeur du dispositif par la dite compression en synergie avec certains caractères spécifiques nouveaux des éléments dans la symbolique améliorée, et la contribution de l'interactivité avec l'opérateur.

4. Dispositif selon les revendications 1, 2, 3 et **caractérisé en ce que**, avec la dite aide et selon les paramètres de l'opérateur, il transforme pour amélioration l'ossature des portées présentées par le piano virtuel ou autre robot défilant de type "Piano roll" en supprimant leurs colonnes perpendiculaires à la longueur du dit clavier, et en les remplaçant par un jeu de colonnes accolées, de deux largeurs, avec leurs nouvelles frontières (9) visibles dans le prolongement des touches foncées, feintes du clavier, les colonnes les plus larges (8) prolongeant et la paire de touches claires, marches des notes "si"-"do" et l'autre paire des notes "mi"-"fa", tandis que les moins large (7) prolongent les marches des autres notes à chaque octave. Cette ossature améliorée s'interprète comme un allongement de tous les secteurs délimités par les touches du clavier, sur toute la hauteur de la représentation. Elle s'ajuste en regard du dit clavier associé afin que la colonne de son "do central" (6b) s'aligne précisément dans un prolongement de la touche du "do central" (5a) au clavier. De ce fait toutes les nouvelles colonnes sont alignés avec leurs touches dédiées au clavier.

5. Dispositif selon les revendications 1, 2, 3, 4 et **caractérisé en ce qu'**il remplace, avec la dite aide et selon les paramètres de l'opérateur, la simple symbolique étagée peu discriminante représentée par le piano virtuel ou autre robot défilant de type "Piano roll" par des étages de symboles préférentiellement colorés parfois hybrides (25) de notes de musique et environnés de leurs attributs, accessits, d'exposants (19), indices, de signes, marqueurs de répétition (22), mentions, flux de couleurs plus évolués dans leurs spécificités et qu'il agence physiquement à l'aide de la dite "IA", de règles, paramètres de l'opérateur, sur la dite ossature améliorée pour constituer une nouvelle représentation étagée selon un nombre optimum et minimum d'étages inférieur à celui dans la représentation par les dits piano virtuel et assimilés, pour une même suite de notes.

6. Dispositif selon les revendications 1, 2, 3, 4, 5 et **caractérisé en ce qu'**il discrimine ses éléments par la couleur, avec la dite aide et selon les paramètres de l'opérateur : les étages de symboles de notes revêtent chacun une couleur (16) différente dans leur succession, cette alternance de couleur peut être cyclique, de cycle noir (17a) rouge (17b) bleu (17c) vert (17d) par exemple. Des symboles de notes sont polychromes (24) s'ils ont une fonction sur deux ou plus d'étages : ceci permet d'associer des étages (10) (16) d'une main à celui (10) (24) ou ceux de l'autre main, notamment lors des liaisons de prolongation, alternant avec des liaisons d'expression. Les symboles de notes émises par les marches, touches claires du clavier, revêtent une marque (18), de couleur claire ou blanche, de même contour de préférence que celui des symboles.

7. Dispositif selon les revendications 1, 2, 3, 4, 5, 6 et **caractérisé en ce qu'**il discrimine ses éléments par leur forme, avec la dite aide et selon les paramètres de l'opérateur : les symboles de notes ont des formes différentes d'une main à l'autre du joueur dans la représentation et peuvent même être discriminés (21) dans chaque main pour distinguer un lieu particulier du voisin à l'étage notamment dans l'accompagnement par une "Basse d'Alberti" (12) distinguée par des séquences de notes cycliques dans un certain ordre (20) identifiable à l'étage de la représentation par un circuit visuel cyclique des lieux des formes particulières, triangle carré losange disque entre autres. Des formes de symboles d'une dite main, réduites en proportion indiquent que ces symboles rapetissés sont indexés (19) en indice ou exposant contre des symboles de taille nominale (4) de l'autre main ou même dans la dite main ce pour préciser les simultanéité, ordre et succession des actions des doigts dans chacune.

8. Dispositif selon les revendications 1, 2, 3, 4, 5, 6, 7 et **caractérisé en ce que**, avec la dite aide, il accepte au regard d'une variété d'options les instructions, modifications, paramètres spécifiques et préférences de l'opérateur par toute interface digitale, holographique et par des moyens de reconnaissance optique optronique opto-mécanique vocale audio visuelle, de frappes de touches d'un clavier, dans les différents modes de création, conversion, lecture, jeu, impression de partition musicale et permet en option que la représentation soit tactile interactive modifiable et émette des sons de notes par le toucher sur ses symboles.

9. Dispositif selon les revendications 1, 2, 3, 4, 5, 6, 7, 8 et **caractérisé en ce qu'**il fait défiler en un mode automatique par défaut, avec la dite aide et selon les paramètres de l'opérateur, les étages de la nouvelle représentation en les rapprochant du dit clavier linéairement suivant un choix de vitesses variables proportionnelles au degré du dit potentiel et linéairement, ou par saccades rythmées en fonction du niveau de densité à l'étage visé par l'opérateur. Le choix de vitesse nulle stoppe le défilement en arrêt sur image de la représentation, imprimable.

10. Dispositif selon les revendications 1, 2, 3, 4, 5, 6, 7, 8, 9 et **caractérisé en ce qu'**il opère, avec la dite aide et selon les paramètres de l'opérateur, une méthode de conversion des fichiers musicaux interactifs construits sur les fichiers de numérisation, par les technologies de Reconnaissance Optique de Musique "ROM" ou par les dites techniques de reconnaissance de frappes de touches d'un clavier, des dites suites et ce vers un nouveau format de fichier musical interactif propre à la représentation du dispositif, avec les étapes suivantes :
a. étape 1 : numérisation de ces suites par les dites ROM depuis une partition imprimée de solfège, ou par les dites techniques de reconnaissance de frappes de touches d'un clavier.
b. étape 2 : conversion du fichier de la dite numérisation en un fichier musical interactif d'extension ".musicxml", ".mxl", ".midi" ou ".mid" entre autres.
c. étape 3 : L'Intelligence Artificielle "IA" analyse dans le dit fichier musical interactif l'architecture des étages simples présentée par piano virtuel ou "Piano roll", par sa capacité de traiter des images, photos dans un contexte de données textuelles.
d. étape 4 : l'IA, informée de cette architecture et intégrant les règles cadres du dispositif, engage ses moteurs d'apprentissage "Machine Learning" ML et de progression en autonomie "Deep Learning" DL, pour s'enquérir au cas par cas dans ses banques de données, des nombreuses présentations par les dits pianos, des premières maquettes de réalisation humaine et applications physiques selon le dispositif en identifiant les architectures comparables les similitudes initiales ayant reçu ou pouvant recevoir un traitement d'extraction de séquences décrit dans la première revendication.
e. étape 5 : sur ces bases et celles des processus d'extraction des séquences identifiés, l'IA propose une solution d'extraction des séquences, dans le dit fichier musical interactif, et en demande confirmation de l'opérateur.
f. étape 6 : l'opérateur optimise les paramètres de la dite proposition d'extraction ou bien les remanie en profondeur, et les confirme au dispositif.
g. étape 7 : Le dispositif génère définitivement les dites séquences extraites.
h. étape 8 : toujours sur les bases acquises grâce aux dits moteurs "ML" "DL" avec l'identification, dans ses banques d'échantillons, du dit couple compression-projection agençant des séquences similaires, l'IA en interpolant leur mode d'application propose, dans un nombre minimum et optimum d'étages, une solution de compression-projection des dites séquences extraites, ce dans un nouveau fichier musical interactif propre à la représentation du dispositif, et en demande confirmation de l'opérateur.
i. étape 9 : l'opérateur optimise les paramètres de la dite proposition de compression-projection des séquences ou bien les remanie en profondeur, et les confirme au dispositif.
j. étape 10 : Le dispositif génère définitivement la compression-projection des dites séquences, dans sa représentation étagée.
